(19) **Europäisches Patentamt / European Patent Office / Office européen des brevets**

(11) **EP 2 469 746 B1**

(12) **EUROPEAN PATENT SPECIFICATION**

(45) Date of publication and mention
of the grant of the patent:
**15.05.2019  Bulletin 2019/20**

(51) Int Cl.:
**H04L 1/00** *(2006.01)*     **H04L 27/26** *(2006.01)*

(21) Application number: **12160589.3**

(22) Date of filing: **03.03.2009**

(54) **Method and apparatus for receiving encoded control information in a  wireless communication system**

Verfahren und Vorrichtung zum Empfangen von kodierten Steuerinformationen in einem drahtlosen Kommunikationssystem

Procédé et appareil de réception d'informations de contrôle codées dans un système de communication sans fil

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.03.2008  KR 20080019650**
**13.05.2008  KR 20080023575**
**10.11.2008  KR 20080111170**
**18.02.2009  KR 20090013635**

(43) Date of publication of application:
**27.06.2012  Bulletin 2012/26**

(62) Document number(s) of the earlier application(s) in accordance with Art. 76 EPC:
**09154227.4 / 2 099 150**

(73) Proprietor: **Samsung Electronics Co., Ltd.**
**Suwon-si, Gyeonggi-do, 443-742 (KR)**

(72) Inventors:
• **Myung, Seho**
**Gyeonggi-do (KR)**
• **Kwon, Hwan-Joon**
**Gyeonggi-do (KR)**
• **Kim, Jae-Yoel**
**Gyeonggi-do (KR)**
• **Lim, Yeon-Ju**
**Gyeonggi-do (KR)**
• **Yun, Sung-Ryul**
**Gyeonggi-do (KR)**
• **Lee, Hak-Ju**
**Gyeonggi-do (KR)**
• **Jeong, Hong-Sil**
**Gyeonggi-do (KR)**

(74) Representative: **Nederlandsch Octrooibureau**
**P.O. Box 29720**
**2502 LS The Hague (NL)**

(56) References cited:
**EP-A2- 1 513 258**

• **ETSI: "Frame structure channel coding and modulation for a second generation digital terrestrial television broadcasting system (DVB-T2)", DIGITAL VIDEO BROADCASTING DOCUMENT A122R1 , no. DVB DOCUMENT A122r1 1 August 2008 (2008-08-01), pages 1-165, XP002523675, Retrieved from the Internet: URL:http://www.dvb.org/technology/standards/a122r1.tm3980r7.DVB-T2.pdf [retrieved on 2009-04-15]**

**Description**

This is a divisional application of European Patent Application 09154227.

**BACKGROUND OF THE INVENTION**

1. Field of the Invention

The present invention relates generally to a method and apparatus for receiving control information in a communication system. More particularly, although not exclusively, the present invention relates to a method and apparatus for receiving encoded control information in a communication system comprising Low Density Parity Check (LDPC) codes.

2. Description of the Related Art

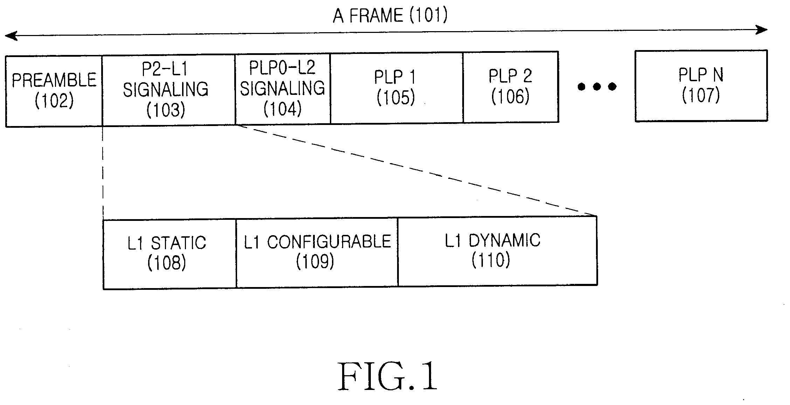

FIG. 1 is a diagram illustrating a transmission scheme for control information in a general wireless communication system.
Referring to FIG. 1, reference numeral 101 denotes a structure of a frame including control information that is transmitted and received in a wireless communication system. Commonly, the frame 101 includes a preamble 102, an P2-L1 signaling 103, an PLPO-L2 signaling 104, and one or more Physical Layer Pipes (PLPs) 105, 106, and 107.
The control information may be transmitted through the preamble 102, the P2-L1 signaling 103, and the PLPO-L2 signaling 104, while data may be transmitted through the PLPs 105, 106, and 107.
The preamble 102 is a signal that is generally used to acquire time and frequency synchronization, and synchronization for a frame boundary at a receiver.
The P2-L1 signaling 103 indicates a part through which an L1 signaling is transmitted. As illustrated in FIG. 1, the P2-L1 signaling 103 can also be referred to as a "P2," because it is transmitted through P2 symbols. The P2 refers to a physical layer signaling, or a Layer 1 (LI) signaling. The physical layer signaling includes static information 108, configurable information 109, and dynamic information 110. The static information 108 includes information that is basically static over the passage of time, and such static information may include information on a cell identifier, a network identifier, the number of Radio Frequency (RF) channels, a frame length, locations of pilot subcarriers, etc. The configurable information 109 includes information that may change in the frames to be transmitted in the future, although without changing on a frame-by-frame basis. Thus, the configurable information 109 may include, for example, information on a service identifier, a modulation order used to transmit data for an individual service, a code rate, etc. The dynamic information 110 includes information that may change on a frame-by-frame basis. Such dynamic information may include information about a location where each PLP carrying service data is transmitted in the current frame, i.e. information about where each PLP starts and ends in the frame.
The PLP0-L2 signaling 104, a part through which an L2 signaling is transmitted, represents a Layer 2 (L2) or Medium Access Control (MAC) signaling. Generally, a PLP on which the L2 information is transmitted may also be referred to as a "PLP0." The PLP0 includes connection information between PLPs and broadcast services to indicate PLPs through which particular services are received. The PLP_1 105, the PLP_2 106, and the PLP_N 107 are service data, and each of them transmits one or a plurality of broadcast service channels. These PLPs, through which actual broadcast data is transmitted, are also called "data PLPs."
A process of actually receiving a particular broadcast service channel in a receiver of a wireless communication system is described below with reference to FIG. 1. Upon acquiring synchronization of the frame through the preamble 102, the receiver gets information on a data transmission scheme and a frame length using the P2-L1 signaling 103, obtains information indicating through which PLP a desired broadcast service channel is transmitted, using the PLP0-L2 signaling 104, and then receives data for broadcast services through the PLPs 105 to 107 carrying data.
In order to provide the services stably in the wireless communication system, transmission error of control information such as the L1 signaling and the L2 signaling should be minimized. The control information is generally encoded before transmission to minimize the transmission error. To this end, there has been a long-felt need for a scheme capable of efficiently encoding the control information.
EP 1 513 258 A2 provides a method for encoding short LDPC codes with an outer BCH code, which have been particularly applied in DVB services over satellite.

**SUMMARY OF THE INVENTION**

The present invention has been made to address at least the above problems and/or disadvantages and to provide at least the advantages described below. Accordingly, an aspect of the present invention provides a method and apparatus for receiving control information in a wireless broadcast communication system. More specifically, the invention relates to a method and apparatus as stipulated by independent claims 1 and 13. Preferred embodiments are stipulated in dependent claims.

**BRIEF DESCRIPTION OF THE DRAWINGS**

The above and other aspects, features and advantages of the present invention will be more apparent from the following description when taken in conjunction with the accompanying drawings, in which:

FIG 1 is a diagram illustrating a transmission scheme for control information in a general wireless communication system;
FIG 2 is a diagram illustrating a process of encoding L1 signaling information used in a wireless communication system to which an embodiment of the present invention is applicable;
FIG 3 is a diagram illustrating a scheme for encoding signaling information according to an embodiment of the present invention;
FIG 4 is a flowchart illustrating an operation of a transmitter according to an embodiment of the present invention;
FIG 5 is a flowchart illustrating an operation of a receiver according to an embodiment of the present invention;
FIG 6 is a block diagram illustrating a structure of a transmitter according to an embodiment of the present invention; and
FIG 7 is a block diagram illustrating a structure of a receiver according to an embodiment of the present invention.

**DETAILED DESCRIPTION OF PREFERRED EMBODIMENTS**

Preferred embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.
The terms and words used in the following description and claims are not limited to their dictionary meanings, but, are merely used by the inventor to enable a clear and consistent understanding of the invention. Accordingly, it should be apparent to those skilled in the art that the following description of preferred embodiments of the present invention are provided for illustration purpose only and not for the purpose of limiting the invention as defined by the appended claims.
It is to be understood that the singular forms "a," "an," and "the" include plural referents unless the context clearly dictates otherwise. Thus, for example, reference to "a component surface" includes reference to one or more of such surfaces.
The present invention provides a method and apparatus for encoding L1 post-signaling information, or control information, into a plurality of LDPC blocks before transmission in a wireless communication system using LDPC codes.
The encoding method proposed by the present invention provides a scheme for encoding L1 static information, L1 configurable information, and L1 dynamic information constituting L1 post-signaling information, in which one or a plurality of coded (or codeword) blocks (i.e. LDPC blocks) are formed according to the total number of bits of the L1 post-signaling information. Although it is assumed in embodiments of the present invention that the L1 post-signaling information includes the L1 static, L1 configurable and L1 dynamic information, the L1 static, L1 configurable and L1 dynamic information should not necessarily be combined together according to requirements of the wireless communication system. Though not mentioned specifically, it can be appreciated that the present invention can be applied even when the L1 post-signaling information is formed of only one or two of the three types of the L1 information. In constructing the multiple LDPC blocks, embodiments of the present invention may divide the L1 post-signaling information into a plurality of blocks so that the LDPC blocks are equal in the number of bits of their input information. In addition to the L1 static information, the L1 configurable information and the L1 dynamic information constituting the L1 post-signaling information, predefined padding bits can be added to each of the blocks. The number of the padding bits may be determined depending on the number of the divided blocks, a modulation scheme (or modulation order) used, or use/nonuse of transmit diversity antenna technology.

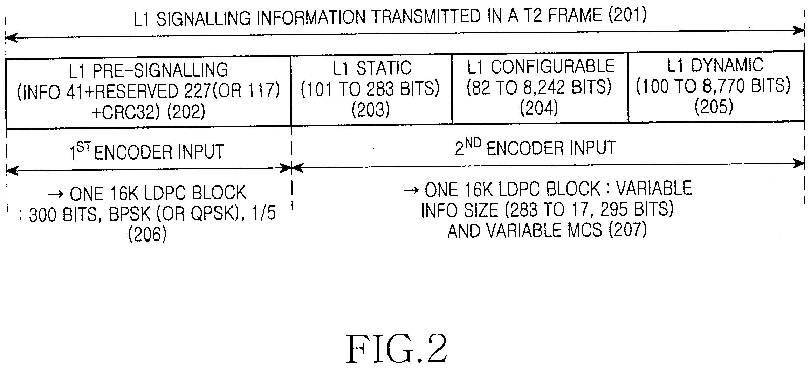

FIG. 2 is a diagram illustrating a process of encoding L1 signaling information used in a wireless communication system to which an embodiment of the present invention is applicable.
Referring to FIG. 2, L1 signaling information further includes L1 pre-signaling information 202 in addition to L1 static information 203, L1 configurable information 204 and L1 dynamic information 205 that constitute the L1 post-signaling information as described in connection with FIG. 1. Although it is assumed in FIG. 2 that the L1 post-signaling information includes three types of L1 information 203, 204 and 205, the L1 post-signaling information may also include two types of the L1 information, as described above.
The L1 pre-signaling information 202 is control information indicating information about a transmission method for the L1 static information 203, the L1 configurable information 204, and the L1 dynamic information 205. That is, the L1 pre-signaling information 202 is control information indicating which subcarriers, modulation schemes (e.g. QPSK, 16QAM, 64QAM, etc.) and code rates are used to transmit the L1 static information 203, the L1 configurable information 204, and the L1 dynamic information 205.

As described above, a transmitter of a general wireless communication system generates one LDPC block 206 by LDPC-encoding the L1 pre-signaling information 202 independently, and also generates one LDPC block 207 by LDPC-encoding a plurality of pieces of L1 information (L1 configurable information, L1 dynamic information, etc.) constituting the L1 post-signaling information.

However, when one LDPC block is generated by LDPC-encoding a plurality of pieces of L1 information constituting the L1 post-signaling information, with the plurality of pieces of L1 information combined together, the number of input bits of the LDPC block is variable, so that the number of input bits encoded is also changeable, resulting in a change in decoding performance. Herein, the L1 pre-signaling information and the L1 post-signaling information may be different in their information structures according to the wireless communication system, and not only LDPC encoding but also other encoding methods can be applied for execution of the encoding.

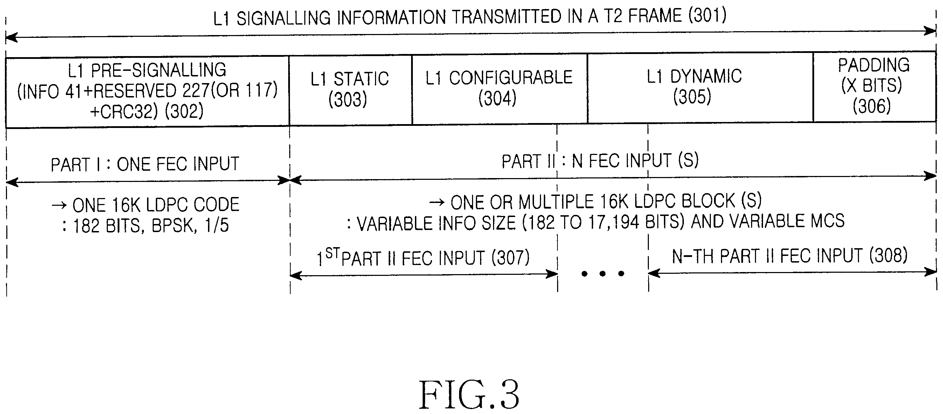

FIG. 3 is a diagram illustrating a scheme for encoding signaling information according to an embodiment of the present invention.

The following description is focused on a method for encoding L1 static information, L1 configurable information and L1 dynamic information, denoted by Part II.

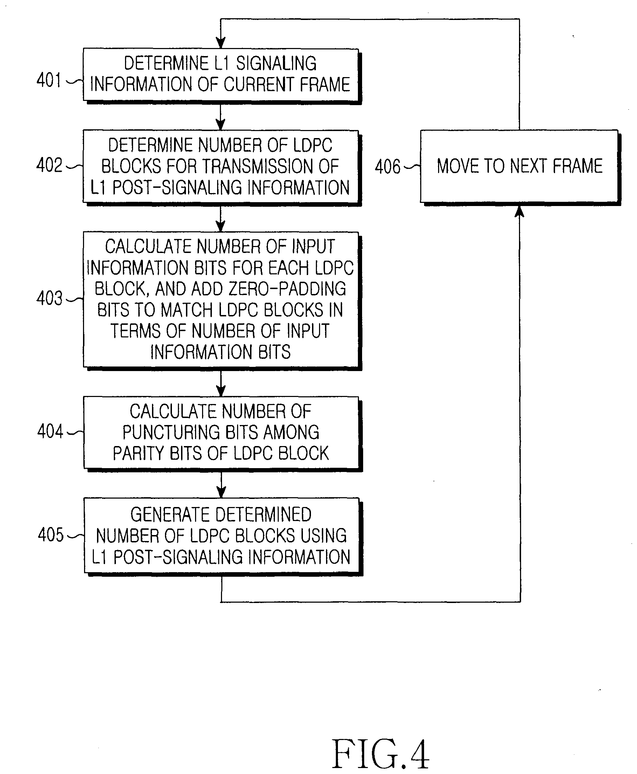

Referring to FIG. 3, an embodiment of the present invention generates an LDPC block as one codeword by LDPC-encoding L1 pre-signaling information 302 independently. Further, the embodiment generates an LDPC block(s) as one or multiple codewords by performing LDPC encoding, once or a plurality of times, on a plurality of pieces of L1 information constituting L1 post-signaling information, for example, L1 static information 303, L1 configurable information 304 and L1 dynamic information 305 combined together. The present invention is characterized by generating multiple codewords (i.e. LDPC blocks)(307,... ,308) with respect to the L1 post-signaling information, such that the multiple LDPC blocks(307,...,308) are equal in the number of bits of their input information. This is to keep the constant performance of each LDPC block because the LDPC codes have characteristics that their performances vary according to the number of input information bits. In order to match the plurality of LDPC blocks(307,...,308) in terms of the number of input information bits, x padding bits are added as shown by reference numeral 306. How the number of the added padding bits is determined will be described in detail below. A transmitter's operation of generating and transmitting one or multiple LDPC blocks according to an embodiment of the present invention will now be described in detail with reference to FIG. 4.

FIG. 4 is a flowchart illustrating an operation of a transmitter according to an embodiment of the present invention.

Referring to FIG. 4, in step 401, the transmitter determines control information, which is to be transmitted through P2 symbols in the current frame. The control information to be transmitted through the P2 symbols includes L1 pre-signaling information and L1 post-signaling information, as described above.

To LDPC-encode the determined control information before transmission, the transmitter determines into how many coded blocks (i.e. LDPC blocks) it will divide the L1 post-signaling information before transmission, in step 402. The determination is made in accordance with Equation (1).

$$N_{post\_FEC\_Blocks} = \left\lceil \frac{K_{post\_pure}}{K_{bch}} \right\rceil \qquad \ldots\ldots\ldots (1)$$

In Equation (1), it is assumed that LDPC inner codes and Bose, Chaudhuri, and Hocquenghem (BCH) outer codes are concatenated to each other.

Here, $N_{post\_FEC\_Blocks}$ denotes the number of the divided LDPC blocks when L1 post-signaling information is divided into multiple LDPC blocks before transmission, $K_{post\_pure}$ denotes a sum of the number of bits of L1 post-signaling information, determined in step 401, and $K_{bch}$ denotes the maximum number of input bits obtained by excluding parity bits of a BCH code and parity bits of an LDPC code from an LDPC block based on a given encoding type (i.e. the maximum number of input bits determined by excluding a parity code from a BCH block). Hereinafter, it is referred to as "the maximum number of input bits of a BCH block."

For example, when an LDPC block is used as a coded block with a size of 16,200 bits, an effective code rate is indicated by $R_{eff}$, and the number of parity bits used in the BCH code is denoted by $N_{bch\_parity}$, the maximum number $K_{bch}$ of input bits of a BCH block is $K_{bh}=16,200 \times R_{eff}-N_{bch\_parity}$. For $R_{eff}=4/9$ and $N_{bch\_parity}=168$ bits, $K_{bch}$ becomes 7032 bits. Further, $\lceil x \rceil$ in Equation (1) indicates the smallest integer greater than or equal to $x$.

However, a value of $K_{bch}$ used in Equation (1) should not necessarily be determined by the above method, and can also be determined by another method according to a given condition of the wireless communication system. Regarding another method, in a wireless communication system using multiple carriers, such as, for example, an Orthogonal Frequency Division Multiplexing (OFDM) system, the maximum number of subcarriers capable of carrying data in one OFDM symbol is determined according to a condition of the system. When the maximum amount of data that can be delivered at once through the maximum number of subcarriers while maintaining the encoding performance considered in a system, is less than the maximum size of an LDPC-coded block, a value of $K_{bch}$ used in Equation (1) can be replaced by a value of the maximum amount of data.

However, when the value of $K_{bch}$ is unchangeable for the reasons that $K_{bch}=16,200 \times R_{eff}-N_{bch\_parity}$ has been defined in a system and the value of $K_{bch}$ is already used for another purpose in the system, Equation (1) can be replaced by Equation (2).

$$N_{post\_FEC\_Blocks} = \left\lceil \frac{K_{post\_pure}}{N_{post\_max\_per\_symbol}} \right\rceil \qquad \ldots \ldots \ldots (2)$$

In Equation (2), $N_{post\_max\_per\_symbol}$ indicates the maximum number of bits capable of carrying L1 post-signaling information in one OFDM symbol according to a condition of the system, and it is generally set less than or equal to the value of $K_{bch}$.

For a better understanding of the present invention, the following example will be described.

Assuming that in an OFDM system using a 4K Fast Fourier Transform (FFT) mode, a maximum of 3408 subcarriers can be used for one OFDM symbol to transmit encoded L1 signaling information, when 45 subcarriers are allocated for transmission of L1 pre-signaling information encoded in the one OFDM symbol, a maximum of 3363 subcarriers can be allocated for transmission of the encoded L1 post-signaling information. When 16-ary Quadrature Amplitude Modulation (QAM) modulation is assumed to be applied, the 3363 subcarriers can carry a total of $3363 \times 4 = 13452$ bits.

Because the encoded L1 post-signaling information should have higher encoding performance compared with the general data, the amount of the L1 post-signaling information should be limited to guarantee the required minimum encoding performance. That is, among the 13452 bits, the specific number of bits is set to the maximum value as the amount of L1 post-signaling information, and the remaining bits are allocated as parity bits of a BCH code or an LDPC code, or dummy bits when necessary.

For example, assume that L1 post-signaling information of 5780 bits or less is transmitted over one OFDM symbol at the request of the system in order to guarantee the required minimum encoding performance for the encoded L1 post-signaling information. In this case, it can be appreciated that the 5780 bits are less than 7032 bits, or the maximum size of $K_{bch}$, when $R_{eff}$ is 4/9 and $N_{bch\_parity}$ is 168 bits. Also, assume that 168 bits are allocated as $N_{bch\_parity}$ parity bits of a BCH code, 7500 bits are allocated as parity bits of an LDPC code, and the remaining 4 bits are allocated as dummy bits. Then, because the total number of bits of the encoded L1 post-signaling information is 13448 bits and 4 dummy bits are included, the encoded L1 post-signaling information with the dummy bits is mapped to (13448 + 4)/4 = 3363 subcarriers, thereby forming a part of an OFDM symbol.

In the above example, (5780 + 168)/13448 is less 4/9, or a value of $R_{eff}$, because it was set less than 4/9 to secure higher encoding performance than that of the general data. Actually, because $13452 \times 4/9 \cong 5979$ is set to obtain a code rate lower than $R_{eff}$ considering encoding performance, the maximum L1 post-signaling information that can be transmitted through one OFDM symbol is always less than 7032 bits.

When the amount of L1 post-signaling information exceeds 5780 bits, the L1 post-signaling information is divided into $N_{post\_FEC\_Blocks}$ LDPC blocks using Equation (1), and transmitted through a process described below. In this case, $K_{bch}$ is set as 5780 bits in Equation (1). However, when a value of $K_{bch}$ is unchangeable as the system already uses it for another purpose, $N_{post\_max\_per\_symbol}$ is set as 5780 bits in Equation (2), and Equation (2) is used instead.

According to another detailed example, assuming that in an OFDM system using a 4K FFT mode, a maximum of 2840 subcarriers can be used for one OFDM symbol to transmit encoded L1 signaling information, when 45 subcarriers are allocated for transmission of L1 pre-signaling information encoded in the one OFDM symbol, a maximum of 2795 subcarriers can be allocated for transmission of encoded L1 post-signaling information. For convenience, when 16QAM modulation is assumed to be applied, the 2795 subcarriers can carry a total of $2795 \times 4 = 11180$ bits.

Assume that among the 11180 bits, the maximum number of bits of L1 post-signaling information transmittable through one OFDM symbol is set as 4748 bits in order to guarantee the required minimum encoding performance according to the system requirements.

It can be understood that the 4748 bits are less than 7032 bits, or the maximum number of input bits of the BCH block, when $R_{eff}=4/9$ and a size of $N_{bch\_parity}$ is 168 bits. Also, assume that 168 bits are allocated as parity bit of a BCH code, 6260 bits are allocated as parity bits of an LDPC code, and the remaining 4 bits are allocated as dummy bits. Then, because the total number of bits of the encoded L1 post-signaling information is 11176 bits and 4 dummy bits are included, the encoded L1 post-signaling information with the dummy bits is mapped to (11176 + 4)/4 = 2795 subcarriers, thereby forming a part of an OFDM symbol.

In the above example, it is noted that (4748 + 168)/11180 is less than 4/9, or a value of $R_{eff}$.

When the amount of the L1 post-signaling information exceeds 4748 bits, the L1 post-signaling information is divided into $N_{post\_FEC\_Blocks}$ LDPC blocks using Equation (1), and transmitted through a process described below. In this case, $K_{bch}$ is set as 4748 bits in Equation (1). However, when a value of $K_{bch}$ is unchangeable as the system already uses it for another purpose, $N_{post\_max\_per\_symbol}$ is set as 4748 bits in Equation (2), and Equation (2) is used instead.

In accordance with embodiments of the present invention, the $K_{bch}$ can be defined as a value determined according to a purpose needed in the system, and it can be equal to or less than the maximum number of input bits of, for example, a BCH block. However, when a value of $K_{bch}$ is unchangeable as the system already uses it for another purpose, $N_{post\_max\_per\_symbol}$ can be set to a proper value in Equation (2), and Equation (2) can be used instead of Equation (1).

As described above, $K_{bch}$ in Equation (1) can be set to a proper value according to requirements of the wireless communication system.

Referring back to FIG. 4, in step 403, the transmitter divides a sum $K_{post\_pure}$ of the number of bits of the L1 post-signaling information by the number $N_{post\_FEC\_Blocks}$ of the LDPC blocks, determined in step 402. In the case where the $K_{post\_pure}$ cannot be divided by $N_{post\_FEC\_Blocks}$, the number $N_{post\_FEC\_Blocks}$ of specific padding bits (each bit value is '0') becomes 2 when $K_{post\_pure}$ is 7033 bits, for example. Because the $K_{post\_pure}$ cannot be divided by 2, one bit of 0 is added to the $K_{post\_pure}$ to make it an even number, and the resultant value is divided by 2. In the above, the number of bits of an information stream after padding bits are added thereto is called $K_{post}$, and a value obtained by dividing it by $N_{post\_FEC\_Blocks}$ is referred to as $K_{sig}$. In the above example, $K_{sig}$ becomes (7033+1)/2) = 3,517 bits. In other words, it is meant that two information streams of 3,517 bits obtained by adding one bit to $K_{post\_pure}$ of 7033 bits and dividing the result by two are intended to be transmitted over two LDPC blocks through two LDPC encodings.

In step 404, the transmitter calculates the number of parity bits to be punctured, among parity bits of each LDPC block. The calculation for the number of puncturing bits is subject to change according to $K_{post}$, a modulation scheme (or a modulation order), the number $N_{fixedP2}$ of OFDM symbols used for P2 transmission (i.e. the number of OFDM symbols with a given FFT size), etc. The number of puncturing bits can be calculated in the following manner. The number of puncturing bits can be calculated in the process of first calculating the temporary number of puncturing bits, correcting the number of puncturing bits taking into account $N_{fixedP2}$ and a structure of a bit interleaver used for transmitting the L1 post-signaling information, and then updating the final number of puncturing bits. The process of calculating the number of puncturing bits will be described using equations, as follows.

Step 1

First, the temporary number $N_{punc\_temp}$ of puncturing bits is calculated in accordance with Equation (3).

$$N_{punc\_temp} = \left\lfloor \frac{6}{5} \times (K_{bch} - K_{sig}) \right\rfloor \qquad \ldots \ldots (3)$$

where $\lfloor x \rfloor$ indicates the greatest integer not greater than $x$.

In Equation (3), $K_{bch}$ denotes the maximum number of input bits of a BCH block, and $K_{sig}$ is a value determined by dividing the number $K_{post}$ of bits obtained by adding padding bits to a sum $K_{post\_pure}$ of the number of bits of L1 post-signaling information, by the number $N_{post\_FEC\_Block}$ of LDPC blocks.

In Equation (3), $K_{bch}=16,200 \times R_{eff} - N_{bch\_parity}$, first defined in Equation (1), is used intact without change. For example, $K_{bch}$ is 7032 bits, when an LDPC block with a size of 16,200 bits is used, an effective code rate $R_{eff}$ is 4/9, and $N_{bch\_parity}$ is 168 bits.

Step 2

After the temporary number of puncturing bits is found, the temporary number $N_{post\_temp}$ of codeword bits is calculated in accordance with Equation (4).

$$N_{post\_temp} = K_{sig} + N_{bch\_parity} + 16,200 \times (1 - R_{eff}) - N_{punc\_temp} \qquad \ldots \ldots (4)$$

Step 3

Thereafter, based on the temporary number of codeword bits, the final number of codeword bits (or the number of bits of each LDPC block) is calculated in accordance with Equation (5) taking a modulation order into account.

$$N_{post} = \begin{cases} If\ N_{fixedP2} = 1, & \left\lceil \dfrac{N_{post\_temp}}{2\eta_{MOD}} \right\rceil \times 2\eta_{MOD}, \\[4mm] Otherwise, & \left\lceil \dfrac{N_{post\_temp}}{\eta_{MOD} \times N_{fixedP2}} \right\rceil \times \eta_{MOD} \times N_{fixedP2} \end{cases} \qquad \ldots\ldots (5)$$

where $\eta_{MOD}$ indicates a modulation order, and is 1, 2, 4 and 6 for BPSK, QPSK, 16-QAM, and 64-QAM, respectively, and $N_{fixedP2}$ is the number of OFDM symbols used for P2 transmission (i.e. transmission of L1 signaling information).

The reason for adjusting the number of codeword bits in Equation (5) is to ensure that the number of modulation symbols after modulation of each LDPC block becomes a multiple of $N_{fixedP2}$, and also to guarantee that the number of bits of each LDPC block becomes a multiple of the number of columns of a block interleaver used in a bit interleaving process. The block interleaving is commonly used only for high-order modulation such as 16QAM and 64QAM, and the number of its columns used is generally $2 \times \eta_{MOD}$.

In Equation (5), the expression is divided into two sub-expressions on the basis of a value of $N_{fixedP2}$, to ensure that the number of symbols after modulation always becomes a multiple of $N_{fixedP2}$. However, when there is no need to necessarily satisfy the multiple relation of $N_{fixedP2}$ according to the requirements of the communication system to which the present invention is applied, it is enough to apply only the first expression for $N_{fixedP2} = 1$ in Equation (5). In this case, the factors determining the result of Equation (5) are a modulation order and the number of columns of a block interleaver.

In sum, Equation (5) may be applied briefly regardless of $N_{fixedP2}$ according to the requirements of the communication system to which the present invention is applied.

In accordance with Equation (5), it is ensured that when a value of $N_{fixedP2}$ is not 1, the number of modulation symbols after modulation of an LDPC block is a multiple of $N_{fixedP2} \times \eta_{MOD}$. However, in the general case, it cannot be ensured that the number of modulation symbols is $2 \times \eta_{MOD}$. Thus, when the number of columns for block interleaving is set to $2 \times \eta_{MOD}$, Equation (5) may not be suitable. In other words, in a case where in an arbitrary system, the number of columns for block interleaving is always set to $2 \times \eta_{MOD}$ and $N_{fixedP2}$ is not 1, Equation (5) may not be suitable to the system if the number of modulation symbols does not satisfy a multiple of 2. Therefore, for $N_{fixedP2} \neq 1$, when the number of modulation symbols does not satisfy a multiple of 2, the final number of codeword bits (i.e. the number of bits of each LDPC block) can be calculated using Equation (6).

$$N_{post} = \left\lceil \frac{N_{post\_temp}}{2 \times \eta_{MOD} \times N_{fixedP2}} \right\rceil \times 2 \times \eta_{MOD} \times N_{fixedP2} \qquad \ldots\ldots\ldots (6)$$

Equation (6) is proposed so that it can be used without specific restrictions on a value of $N_{fixedP2}$.

A value of $N_{fixedP2}$ may be set as a value having a particular meaning according to the requirements of the system. For example, when a value of $N_{fixedP2}$ is set to the same value as $N_{post\_FEC\_Blocks}$ in Equation (2), the value of $N_{fixedP2}$ can be determined, once $N_{post\_FEC\_Blocks}$ is determined in the system. If this is applied to Equation (6), Equation (6) can be written as Equation (7).

$$N_{post} = \left\lceil \frac{N_{post\_temp}}{2\eta_{MOD} \times N_{post\_FEC\_Blocks}} \right\rceil \times 2\eta_{MOD} \times N_{post\_FEC\_Blocks} \qquad \ldots\ldots\ldots (7)$$

In addition, a value of $N_{fixedP2}$ can be divided according to a condition of the system, similarly to Equation (5), and set as different values. For example, assume that the system uses a time interleaving technique during transmission of L1 post-signaling information, and has detected an "L1_TI_depth" field in signaling information having information as set forth in Table 1, from the L1 pre-signaling information.

Table 1

| L1_TI_depth | Time Interleaving Depth $N_{L1\_TI\_depth}$ |
|---|---|
| 00 | No time interleaving |
| 01 | $N_{post\_FEC\_Blocks}$ OFDM symbols |
| 10 | 4 OFDM symbols |
| 11 | 8 OFDM symbols |

In accordance with Table 1, when the "L1_TI_depth" is 10 or 11, the system transmits L1 post-signaling information over 4 or 8 OFDM symbols regardless of a value of $N_{post\_FEC\_Blocks}$. Therefore, Equation (8) can be used according to a value of "L1_TI_depth."

$$N_{post} = \begin{cases} \text{If } L1\_TI\_depth = 00 \text{ or } 01, \\ \left\lceil \dfrac{N_{post\_temp}}{2\eta_{MOD} \times N_{post\_FEC\_Blocks}} \right\rceil \times 2\eta_{MOD} \times N_{post\_FEC\_Blocks}, \\ Otherwise, \\ \left\lceil \dfrac{N_{post\_temp}}{2\eta_{MOD} N_{L1\_TI\_depth}} \right\rceil \times 2\eta_{MOD} \times N_{L1\_TI\_depth}. \end{cases} \quad \dots\dots (8)$$

where a value of $N_{L1\_TI\_depth}$ is 4 for "L1_TI_depth"=10, and 8 for "L1_TI_depth"=11.

To subdivide the L1 post-signaling information according to application/non-application of time interleaving, for "L1_TI_depth"=00 or 01, the final number $N_{post}$ of codeword bits (i.e. the number of bits of each LDPC block) can be given as Equation (9).

$$N_{post} = \begin{cases} L1\_TI\_depth = 00; \\ \left\lceil \dfrac{N_{post\_temp}}{2\eta_{MOD}} \right\rceil \times 2\eta_{MOD}, \\ L1\_TI\_depth = 01; \\ \left\lceil \dfrac{N_{post\_temp}}{2\eta_{MOD} \times N_{psst\_FEC\_locks}} \right\rceil \times 2\eta_{MOD} \times N_{post\_FEC\_Blocks}, \\ otherwise, \\ \left\lceil \dfrac{N_{post\_temp}}{2\eta_{MOD} \times N_{L1\_TI\_depth}} \right\rceil \times 2\eta_{MOD} \times N_{L1\_TI\_depth}. \end{cases} \quad \dots\dots (9)$$

In addition, for "L1_TI_depth"=00 or 01, because "L1_TI_depth" is always a multiple of 2, Equation (10) is also possible.

$$N_{post} = \begin{cases} If\ L1\_TI\_depth = 00\ or\ 01, \\ \left\lceil \dfrac{N_{post\_temp}}{2\eta_{MOD} \times N_{post\_FEC\_Blocks}} \right\rceil \times 2\eta_{MOD} \times N_{post\_FEC\_Blocks}, \\ Otherwise, \\ \left\lceil \dfrac{N_{post\_temp}}{\eta_{MOD} \times N_{L1\_TI\_depth}} \right\rceil \times \eta_{MOD} \times N_{L1\_TI\_depth}. \end{cases} \qquad \dots \dots (10)$$

In this case, it is guaranteed that $N_{post}$ is still a multiple of $2 \times \eta_{MOD}$.

Step 4

Finally, the final number of puncturing bits among the parity bits of each LDPC block is updated. The final number $N_{punc}$ of puncturing bits is calculated in accordance with Equation (11).

$$N_{punc} = N_{punc\_temp} - (N_{post} - N_{post\_temp}) \qquad \dots \dots (11)$$

where $N_{punc\_temp}$ denotes the temporary number of puncturing bits, calculated in Step 1, $N_{post}$ denotes the final number of codeword bits (i.e. the number of bits of each LDPC block), and $N_{post\_temp}$ denotes the temporary number of codeword bits, calculated in Step 2.

Referring back again to FIG. 4, After calculating the number of puncturing bits among the parity bits of each LDPC block, the transmitter generates, in step 405, as many LDPC blocks as the number of coded blocks, determined in step 402, using the L1 post-signaling information with padding bits. The LDPC blocks are transmitted after as many parity bits as the calculated number of puncturing bits are punctured. In step 406, the transmitter moves to the next frame, and then repeats the above operation of steps 401 to 405.

An example of the calculation process in the operation of the transmitter is summarized in Table 2.

Table 2

| Step | Operation |
|---|---|
| 1 | Calculate Equation (2): $N_{post\_FEC\_Blocks} = \left\lceil \dfrac{K_{post\_pure}}{N_{post\_\max\_per\_symbol}} \right\rceil$ |
| 2 | 1) If needed, a proper value is added to $K_{post\_pure}$ so that it becomes a multiple of $N_{post\_FEC\_Blocks}$, and the resultant value is defined as $N_{post}$. When $K_{post\_pure}$ is a multiple of $N_{post\_FEC\_Blocks}$ from the beginning, $N_{post}$ and $K_{post\_pure}$ have the same value.<br>2) $K_{post}/K_{post\_pure}$ is defined as $K_{sig}$. |
| 3 | Calculate Equation (3): $N_{punc\_temp} = \left\lfloor \dfrac{6}{5} \times (K_{bch} - K_{sig}) \right\rfloor$ |
| 4 | Calculate Equation (4):<br>$N_{post\_temp} = K_{sig} + N_{bch\_parity} + 16{,}200 \times (1 - R_{eff}) - N_{punc\_temp}$ |
| 5 | Calculate $N_{post}$ using Equation (8) in accordance with a time interleaving technique defined in Table 1, which is applied to post-signaling. |
| 6 | Calculate Equation (11): $N_{punc} = N_{punc\_temp} - (N_{post} - N_{post\_temp})$ |

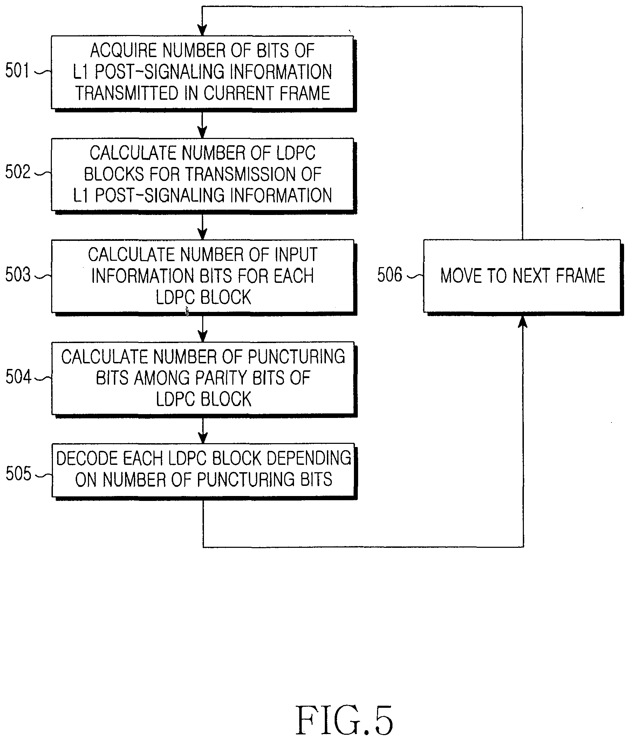

FIG. 5 is a flowchart illustrating an operation of a receiver according to an embodiment of the present invention.

Referring to FIG. 5, in step 501, the receiver acquires the number of bits of L1 post-signaling information transmitted in the current frame by receiving and demodulating L1 pre-signaling information. The number of bits of the L1 post-signaling information means $K_{post}$ described in FIG. 4, to which padding bits are added. In step 502, the receiver calculates the number of coded blocks (i.e. LDPC blocks) through which L1 post-signaling information is transmitted, in accordance with Equation (12).

$$N_{post\_FEC\_Blocks} = \frac{K_{post}}{K_{bch}} \qquad \dots\dots\dots (12)$$

It is to be noted that the value of Equation (12) can also be calculated as Equation (13) according to the requirements of the system.

$$N_{post\_FEC\_Blocks} = \frac{K_{post}}{N_{post\_max\_per\_symbol}} \qquad \dots\dots\dots (13)$$

In step 503, the receiver calculates the number $K_{sig}$ of input information bits for each LDPC block (i.e. the number of bits of input information with padding bits) in accordance with Equation (14).

$$K_{sig} = \frac{K_{post}}{K_{post\_FEC\_Blocks}} \qquad \dots\dots\dots (14)$$

In step 504, the receiver calculates the number of puncturing bits among parity bits of each LDPC block. The calculation process of step 504 is equal to the method described in FIG. 4 using Equation (3), Equation (4), and Equation (5) to Equation (11). In step 505, the receiver decodes as many LDPC blocks as the number of LDPC blocks, determined in step 502, through an LDPC decoding process using the number of puncturing bits, calculated in step 504, and acquires L1 post-signaling information from each decoded LDPC block. In step 506, the receiver moves to the next frame and repeats the operation of steps 501 to 505.

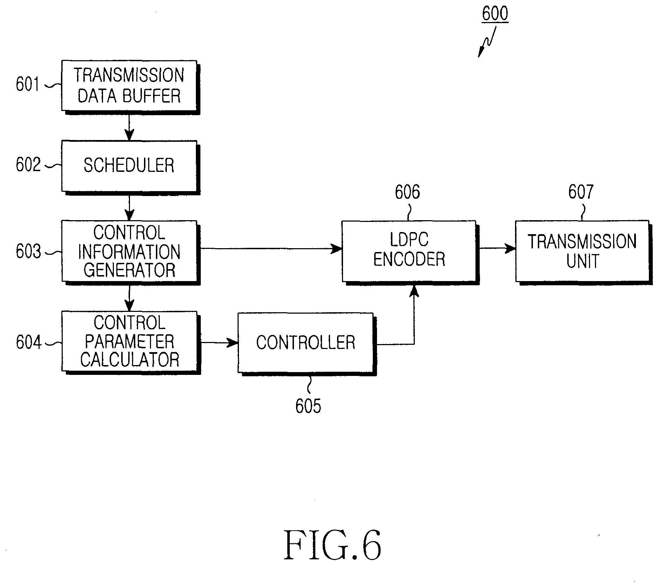

FIG. 6 is a block diagram illustrating a structure of a transmitter 600 according to an embodiment of the present invention. The transmitter 600 in FIG. 6 represents an apparatus for transmitting L1 signaling information as control information.

Referring to FIG. 6, the transmitter 600 includes a transmission data buffer 601, a scheduler 602, a control information generator 603, a control parameter calculator 604, a controller 605, an LDPC encoder 606, and a transmission unit 607. In embodiments of the present invention, the control information, which is encoded into one or multiple LDPC blocks before transmission, includes L1 pre-signaling information and L1 post-signaling information as physical layer signaling information, as described above.

When a wireless communication system provides broadcast services, the transmission data buffer 601 buffers service data (i.e. PLPs) that a plurality of broadcast service channels should transmit. The scheduler 602 performs scheduling depending on a state of the service data (PLPs) buffered in the transmission data buffer 601. The scheduling operation may include determining L1 pre-signaling information and L1 post-signaling information as control information to be transmitted, for every frame. The scheduling result is provided to the control information generator 603. The control information generator 603 generates detailed field values of the L1 pre-signaling information and the L1 post-signaling information as control information (i.e. P2 information). The L1 post-signaling information includes L1 configurable information 204, L1 dynamic information 205, or the like.

The control parameter calculator 604 calculates the number of LDPC blocks, the number of modulation symbols, the number of padding bits, the number of puncturing bits among parity bits of each LDPC block, etc. as control parameters used for encoding control information into one or plural LDPC blocks before transmission as described in FIG. 4, using the field values received from the control information generator 603. The control parameters calculated by the control parameter calculator 604 are provided to the controller 605, and the controller 605 controls an encoding operation of the LDPC encoder 606 according to the calculated parameters. The LDPC encoder 606, under the control of the controller 605, encodes the L1 pre-signaling information and the L1 post-signaling information received from the control information generator 603, into LDPC blocks independently. Herein, in accordance with the process described in FIG. 4, the L1 pre-signaling information is divided into one or more blocks and zero-padding bits are added thereto, so that the information is output as one or multiple LDPC blocks. Parity bits, the number of which is equal to the calculated number of puncturing bits, are punctured from the LDPC blocks. The output of the LDPC encoder 606 is provided to the transmission unit 607, and the transmission unit 607 transmits the LDPC-encoded control information with a frame having a predetermined format. Although the control parameter calculator 604 and the controller 605 are illustrated as separate components in FIG. 6, they can be constructed in one controller.

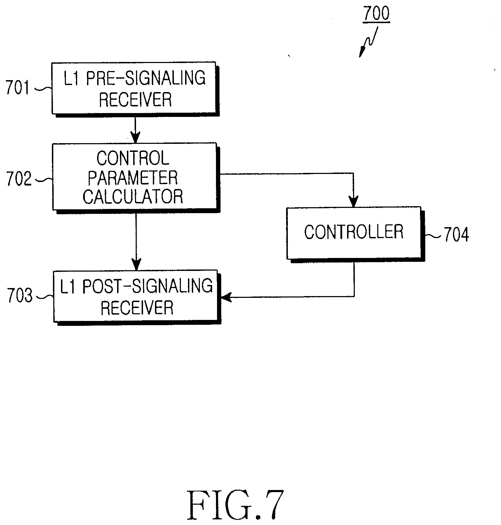

FIG. 7 is a block diagram illustrating a structure of a receiver 700 according to an embodiment of the present invention. The receiver 700 in FIG. 7 represents an apparatus for receiving L1 signaling information as control information.

Referring to FIG. 7, the receiver 700 includes an L1 pre-signaling receiver 701, a control parameter calculator 702, an L1 post-signaling receiver 703, and a controller 704.

The receiver 700 in FIG. 7 receives L1 pre-signaling information and L1 post-signaling information as control information for reception of service data. The L1 pre-signaling information is control information indicating a transmission method for L1 post-signaling information including L1 configurable information 204 and L1 dynamic information 205. The L1 pre-signaling receiver 701 receives the L1 pre-signaling information, acquires information on subcarriers, a modulation scheme (e.g. QPSK, 16QAM, 64QAM, etc.) and a code rate it will use as a transmission method for the L1 post-signaling information, and also acquires information on the number of modulation symbols.

The control parameter calculator 702 calculates control parameters including the number of LDPC blocks, the number of padding bits for LDPC blocks, the number of puncturing bits among parity bits of the LDPC blocks, and the number of modulation symbols in the manner described in FIG. 5, using the information provided from the L1 pre-signaling receiver 701. The control parameters calculated by the control parameter calculator 702 are provided to the controller 704. The controller 704 controls an LDPC decoding operation on one or multiple LDPC blocks received at the L1 post-signaling receiver 703 using the control parameters, and the L1 post-signaling receiver 703 decodes the L1 post-signaling information. Although the control parameter calculator 702 and the controller 704 are illustrated as separate components in FIG. 7, they may be constructed in one controller.

As is apparent from the foregoing description, the embodiments of the present invention can divide control information into multiple LDPC blocks and perform LDPC encoding thereon considering the characteristics that decoding performance depends on the number of input information bits of each LDPC block, so that encoding performance of each LDPC block can be constantly maintained.

In addition, the embodiments of the present invention can divide control information, i.e. L1 post-signaling information, into a plurality of blocks having the same number of input bits, insert padding bits in each of the divided blocks, and perform LDPC encoding thereon, thereby enabling more efficient encoding. Therefore, it is possible to perform more efficient signaling information transmission/reception through LCPC encoding.

The embodiments of the present invention can also be embodied as computer-readable codes on a computer-readable recording medium. The computer-readable recording medium is any data storage device that can store data, which can thereafter be read by a computer system. Examples of the computer-readable recording medium include, but are not limited to, Read-Only Memory (ROM), Random-Access Memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, function programs, codes, and code segments for accomplishing the present invention can be easily construed as within the scope of the invention by programmers skilled in the art to which the present invention pertains.

While the invention has been shown and described with reference to a certain preferred embodiments thereof, it will be understood by those skilled in the art that various changes in form and details may be made therein without departing from scope of the invention as defined by the appended claims.

## Claims

1. A method for receiving control information through a part of Layer 1, L1, signaling information, the part of L1 signaling information including information associated with at least one Physical Layer Pipe (PLP) in a frame, in a broadcasting communication system, the method comprising the steps of:

   acquiring (501) information for a number of bits of the part of the L1 signaling information from a received frame;
   calculating (502) a number of LDPC blocks into which the part of the L1 signaling information is divided;
   calculating a number of input information bits of each LDPC block when there are a plurality of LDPC blocks, such that the plurality of LDPC blocks have a same number of input information bits, and
   calculating a number of puncturing bits among parity bits of each LDPC block; and
   decoding one or more received LDPC blocks based on the information acquired and calculated in the preceding steps.

2. The method of claim 1, wherein a time interleaving technique is used during transmission of the part of the L1 signaling information and wherein calculating a number of puncturing bits further comprises:

   calculating a temporary number of puncturing bits and a temporary number of codeword bits of each LDPC block;
   calculating a final number of codeword bits of each LDPC block in accordance with the modulation order, time interleaving depth and the temporary number of codeword bits; and
calculating a final number of puncturing bits in accordance with the temporary number of puncturing bits, the temporary number of codeword bits and the final number of codeword bits.

3. The method of claim 2, wherein calculating a temporary number of puncturing bits further comprises:
calculating the temporary number of puncturing bits based on a difference between a maximum number of input information bits of a BCH block and the number of input information bits of each coded block.

4. The method of claim 2, wherein calculating a temporary number of codeword bits further comprises:
calculating the temporary number of codeword bits of each coded block based on the number of input information bits of each coded block, a number of parity bits of a BCH block, the temporary number of puncturing bits, and an effective code rate of the coded blocks.

5. The method of claim 2, wherein calculating a final number of codeword bits further comprises:
calculating the final number of codeword bits in accordance with the temporary number of codeword bits, a number of symbols used for transmission of Part of the L1 signaling information, the time interleaving depth and the modulation order.

6. The method of claim 1, wherein the number of coded blocks divided from the Part of the L1 signaling information is calculated in accordance with a value obtained by dividing the number of bits of the Part of the L1 signaling information by a maximum number of bits carrying the Part of the L1 signaling information in one Orthogonal Frequency Division Multiplexing (OFDM) symbol.

7. The method of claim 1, wherein the number of input information bits of each coded block is calculated based on a value obtained by dividing the number of bits of the Part of the L1 signaling information by the number of coded blocks.

8. The method of claim 2, wherein the temporary number of puncturing bits is determined in accordance with the following equation;

$$N_{punc\_temp} = \left\lfloor \frac{6}{5} \times (K_{bch} - K_{sig}) \right\rfloor$$

where $N_{punc\_temp}$ denotes the temporary number of puncturing bits, $K_{bch}$ denotes the maximum number of input information bits of a BCH block, $K_{sig}$ denotes the number of bits obtained by adding padding bits to the total number of bits of the L1 signaling information, and $\lfloor x \rfloor$ indicates a maximum integer less than or equal to $x$.

9. The method of claim 1, wherein the number of LDPC blocks is calculated in accordance with the following equation;

$$N_{post\_FEC\_Blocks} = \left\lceil \frac{K_{post\_pure}}{N_{post\_max\_per\_symbol}} \right\rceil$$

where $N_{post\_FEC\_Blocks}$ denotes the number of LDPC blocks, $K_{post\_pure}$ denotes the number of bits of the part of L1 signaling information, $N_{post\_max\_per\_symbol}$ denotes a maximum number of bits capable of carrying the part of L1 signaling information in one Orthogonal Frequency Division Multiplexing (OFDM) symbol, and $\lceil x \rceil$ indicates a minimum integer greater than or equal to x.

10. The method of claim 2, wherein the final number of codeword bits is calculated in accordance with the following equation;

$$N_{post} = \left\lceil \frac{N_{post\_temp}}{2\eta_{MOD} \times N_{post\_FEC\_Blocks}} \right\rceil \times 2\eta_{MOD} \times N_{post\_FEC\_Blocks}$$

where $N_{post}$ denotes the final number of codeword bits, $N_{post\_temp}$ denotes the temporary number of codeword bits,

$\eta_{MOD}$ denotes the modulation order, $N_{post\_FEC\_Blocks}$ denotes the number of LDPC blocks, and $\lceil x \rceil$ indicates a minimum integer greater than or equal to x.

11. The method of claim 2, wherein the final number of codeword bits is calculated in accordance with the following equation;

$$N_{post} = \begin{cases} If\ L1\_TI\_depth = 00\ or\ 01, \\ \left\lceil \dfrac{N_{post\_temp}}{2\eta_{MOD} \times N_{post\_FEC\_Blocks}} \right\rceil \times 2\eta_{MOD} \times N_{post\_FEC\_Blocks}, \\ Otherwise, \\ \left\lceil \dfrac{N_{post\_temp}}{2\eta_{MOD} N_{L1\_TI\_depth}} \right\rceil \times 2\eta_{MOD} \times N_{L1\_TI\_depth}. \end{cases}$$

where $N_{post}$ denotes the final number of codeword bits, $N_{post\_temp}$ denotes the temporary number of codeword bits, $\eta_{MOD}$ denotes the modulation order, $N_{post\_FEC\_Blocks}$ denotes the number of coded blocks, $N_{L1\_TI\_depth}$ denotes the time interleaving depth, and $\lceil x \rceil$ indicates a minimum integer greater than or equal to x.

12. The method of any one of claims 2, 5, 11, or 12, wherein the modulation order is any one of 1, 2, 4 and 6 for Binary Phase Shift Keying (BPSK), Quadrature Phase Shift Keying (QPSK), 16-ary Quadrature Amplitude Modulation (16-QAM) and 64-QAM, respectively.

13. An apparatus (700) for receiving control information through a part of Layer 1, L1, signaling information, the part of L1 signaling information including information associated with at least one Physical Layer Pipe (PLP) in a frame, in a broadcasting communication system, the apparatus comprising:

a receiving unit (701, 703) for receiving and decoding control information including Layer 1, L1, signaling information; and
a controller (704) for acquiring information for a number of bits of the part of the L1 signaling information from a received frame, calculating a number of LDPC blocks into which the part of the L1 signaling information is divided, and calculating a number of input information bits of each LDPC block when there are a plurality of LDPC blocks, such that the plurality of LDPC blocks have a same number of input information bits, and calculating a number of puncturing bits among parity bits of each LDPC block, and controlling an operation of the receiving unit (701, 703)to decode one or more received LDPC blocks based on the information acquired and calculated in the preceding steps.

14. The apparatus (700) of claim 13 is adapted to operate according to one of claims 2 to 12.

**Patentansprüche**

1. Verfahren zum Empfangen von Steuerinformationen durch einen Teil von Schicht 1, L1, - Signalisierungsinformationen, wobei der Teil von L1-Signalisierungsinformationen Informationen aufweist, die mindestens einer Physical Layer Pipe (PLP) in einem Rahmen in einem drahtlosen Rundfunksystem zugewiesen sind, wobei das Verfahren die folgenden Schritte umfasst:

Erfassen (501) von Informationen für eine Anzahl von Bits des Teils der L1-Signalisierungsinformationen von einem empfangenen Rahmen;
Berechnen (502) einer Anzahl von LDPC-Blöcken, in die der Teil der L1-Signalisierungsinformationen unterteilt ist;
Berechnen einer Anzahl von Eingabeinformationsbits jedes LDPC-Blocks, wenn eine Mehrzahl von LDPC-Blöcken vorhanden ist, sodass die Mehrzahl von LDPC-Blöcken eine gleiche Anzahl von Eingabeinformationsbits aufweisen, und
Berechnen einer Anzahl von Punktierungsbits unter Paritätsbits jedes LDPC-Blocks; und
Decodieren eines oder mehrerer empfangener LDPC-Blöcke basierend auf den Informationen, die in den vorhergehenden Schritten erfasst und berechnet wurden.

2. Verfahren nach Anspruch 1, wobei eine Zeitverschachtelungtechnik während der Übertragung des Teils der L1-Signalisierungsinformationen angewendet wird und wobei das Berechnen einer Anzahl von Punktierungsbits ferner Folgendes umfasst:

Berechnen einer temporären Anzahl von Punktierungsbits und einer temporären Anzahl von Codewortbits jedes LDPC-Blocks;
Berechnen einer endgültigen Anzahl von Codewortbits jedes LDPC-Blocks gemäß der Modulationsreihenfolge, der Zeitverschachtelungstiefe und der temporären Anzahl von Codewortbits; und
Berechnen einer endgültigen Anzahl von Punktierungsbits in Übereinstimmung mit der temporären Anzahl von Punktierungsbits, der temporären Anzahl von Codewortbits und der endgültigen Anzahl von Codewortbits.

3. Verfahren nach Anspruch 2, wobei das Berechnen einer temporären Anzahl von Punkturierungsbits ferner Folgendes umfasst:
Berechnen der temporären Anzahl von Punktierungsbits basierend auf einer Differenz zwischen einer maximalen Anzahl von Eingabeinformationsbits eines BCH-Blocks und der Anzahl von Eingabeinformationsbits jedes codierten Blocks.

4. Verfahren nach Anspruch 2, wobei das Berechnen einer temporären Anzahl von Codewortbits ferner Folgendes umfasst:
Berechnen der temporären Anzahl von Codewortbits jedes codierten Blocks basierend auf der Anzahl der eingegebenen Informationsbits jedes codierten Blocks, einer Anzahl von Paritätsbits eines BCH-Blocks, der temporären Anzahl von Punktierungsbits und einer effektiven Coderate der codierten Blöcke .

5. Verfahren nach Anspruch 2, wobei das Berechnen einer endgültigen Anzahl von Codewortbits ferner Folgendes umfasst:
Berechnen der endgültigen Anzahl von Codewortbits in Übereinstimmung mit der temporären Anzahl von Codewortbits, einer Anzahl von Symbolen, die zur Übertragung eines Teils der L1-Signalisierungsinformationen verwendet werden, der Zeitverschachtelungstiefe und der Modulationsreihenfolge.

6. Verfahren nach Anspruch 1, wobei die Anzahl von codierten Blöcken, die von dem Teil der L1-Signalisierungsinformationen dividiert sind, in Übereinstimmung mit einem Wert berechnet wird, der durch Dividieren der Anzahl von Bits des Teils der L1-Signalisierungsinformationen durch eine maximale Anzahl von Bits, die den Teil der L1-Signalisierungsinformationen in einem Orthogonal Frequency Division Multiplexing (OFDM) -Symbol tragen, erhalten wird.

7. Verfahren nach Anspruch 1, wobei die Anzahl der eingegebenen Informationsbits jedes codierten Blocks basierend auf einem Wert berechnet wird, der durch Dividieren der Anzahl von Bits des Teils der L1-Signalisierungsinformationen durch die Anzahl von codierten Blöcken erhalten wird.

8. Verfahren nach Anspruch 2, wobei die temporäre Anzahl von Punktierungsbits in Übereinstimmung mit der folgenden Gleichung bestimmt wird:

$$N_{punc\_temp} = \left\lfloor \frac{6}{5} \times (K_{bch} - K_{sig}) \right\rfloor$$

wobei $N_{punc\_temp}$ die temporäre Anzahl von Punktierungsbits bezeichnet, $K_{bch}$ die maximale Anzahl von Eingabeinformationsbits eines BCH-Blocks bezeichnet, $K_{sig}$ die Anzahl von Bits bezeichnet, die durch Addieren von Füllbits zu der Gesamtanzahl von Bits der L1-Signalisierungsinformationen erhalten wird, und $\lfloor X \rfloor$ eine maximale ganze Zahl angibt, die kleiner oder gleich X ist.

9. Verfahren nach Anspruch 1, wobei die Anzahl von LDPC-Blöcken in Übereinstimmung mit der folgenden Gleichung bestimmt wird:

$$N_{post\_FEC\_Blocks} = \left\lceil \frac{K_{post\_pure}}{N_{post\_max\_per\_symbol}} \right\rceil$$

wobei $N_{post\_FEC\_Blocks}$ die Anzahl der LDPC-Blöcke bezeichnen, $K_{post\_pure}$ die Anzahl der Bits des Teils der L1-Signalisierungsinformationen bezeichnet, $N_{post\_max\_per\_symbol}$ eine maximale Anzahl von Bits bezeichnet, die den Teil der L1-Signalisierungsinformationen in einem Orthogonal Frequency Division Multiplexing (OFDM) -Symbol tragen können, und $\lceil x \rceil$ eine minimale ganze Zahl angibt, die größer oder gleich $\chi$ ist.

**10.** Verfahren nach Anspruch 2, wobei die endgültige Anzahl von Codewortbits in Übereinstimmung mit der folgenden Gleichung berechnet wird:

$$N_{post} = \left\lceil \frac{N_{post\_temp}}{2\eta_{MOD} \times N_{post\_FEC\_Blocks}} \right\rceil \times 2\eta_{MOD} \times N_{post\_FEC\_Blocks}$$

wobei $N_{post}$ die endgültige Anzahl von Codewortbits bezeichnet, $N_{posttemp}$ die temporäre Anzahl von Codewortbits bezeichnet, $\eta_{MOD}$ die Modulationsreihenfolge bezeichnet, $N_{post\_FEC\_Blocks}$ die Anzahl von LDPC-Blöcken bezeichnet und $\lceil x \rceil$ eine minimale ganze Zahl angibt, die größer oder gleich $\chi$ ist.

**11.** Verfahren nach Anspruch 2, wobei die endgültige Anzahl von Codewortbits in Übereinstimmung mit der folgenden Gleichung berechnet wird:

$$N_{post} = \begin{cases} If\ L1\_TI\_depth = 00\ or\ 01, \\ \left\lceil \dfrac{N_{post\_temp}}{2\eta_{MOD} \times N_{post\_FEC\_Blocks}} \right\rceil \times 2\eta_{MOD} \times N_{post\_FEC\_Blocks}, \\ Otherwise, \\ \left\lceil \dfrac{N_{post\_temp}}{2\eta_{MOD} N_{L1\_TI\_depth}} \right\rceil \times 2\eta_{MOD} \times N_{L1\_TI\_depth}. \end{cases}$$

wobei $N_{post}$ die endgültige Anzahl von Codewortbits bezeichnet, $N_{post\_temp}$ die temporäre Anzahl von Codewortbits bezeichnet, $\eta_{MOD}$ die Modulationsreihenfolge bezeichnet, $N_{post\_FEC\_Blocks}$ die Anzahl codierter Blöcke bezeichnet, $N_{L1\_T1\_depth}$ die Tiefe einer zeitlichen Verschachtelung bezeichnet und $\lceil x \rceil$ eine minimale ganze Zahl angibt, die größer oder gleich X ist.

**12.** Verfahren nach einem der Ansprüche 2, 5, 11 oder 12, wobei die Modulationsreihenfolge eine beliebige von 1, 2, 4 und 6 für Binary Phase Shift Keying (BPSK) Quadrature Phase Shift Keying (QPSK) 16-ary Quadrature Amplitude Modulation, 16-QAM bzw. 64-QAM ist.

**13.** Vorrichtung (700) zum Empfangen von Steuerinformationen durch einen Teil von Schicht 1, L1, -Signalisierungsinformationen, wobei der Teil von L1-Signalisierungsinformationen Informationen aufweist, die mindestens einer Physical Layer Pipe (PLP) in einem Rahmen in einem Rundfunksystem zugewiesen sind, wobei die Vorrichtung Folgendes umfasst:

eine Empfangseinheit (701, 703) zum Empfangen und Decodieren von Steuerinformationen, einschließlich Schicht 1, L1, -Signalisierungsinformationen; und
eine Steuerung (704) zum Erfassen von Informationen für eine Anzahl von Bits des Teils der L1-Signalisierungsinformationen von einem empfangenen Rahmen, Berechnen einer Anzahl von LDPC-Blöcken, in die der Teil der L1-Signalisierungsinformationen unterteilt ist, und Berechnen einer Anzahl von Eingabeinformationsbits jedes LDPC-Blocks, wenn eine Mehrzahl von LDPC-Blöcken vorhanden ist, sodass die Mehrzahl von LDPC-Blöcken eine gleiche Anzahl von Eingabeinformationsbits aufweisen, und Berechnen einer Anzahl von Punktierungsbits unter Paritätsbits jedes LDPC-Blocks und Steuern eines Betriebs der Empfangseinheit (701, 703) zum Decodieren eines oder mehrerer empfangener LDPC-Blöcke basierend auf den in den vorhergehenden Schritten erfassten und berechneten Informationen.

**14.** Vorrichtung (700) nach Anspruch 13, die ausgelegt ist, nach einem der Ansprüche 2 bis 12 betrieben zu werden.

**Revendications**

**1.** Procédé de réception d'informations de commande par l'intermédiaire d'une partie d'informations de signalisation de couche 1, L1, la partie d'informations de signalisation L1 comprenant des informations associées à au moins un conduit de couche physique, PLP, dans une trame, dans un système de communication de diffusion, le procédé comprenant les étapes de :

l'acquisition (501) d'informations relatives à un nombre de bits de la partie des informations de signalisation L1 depuis une trame reçue ;
le calcul (502) d'un nombre de blocs LDPC dans lesquels la partie des informations de signalisation L1 est divisée ;
le calcul d'un nombre de bits d'informations d'entrée de chaque bloc LDPC lorsqu'il y a une pluralité de blocs LDPC, de sorte que la pluralité de blocs LDPC aient le même nombre de bits d'informations d'entrée, et le calcul d'un nombre de bits de perforation parmi des bits de parité de chaque bloc LDPC ; et
le décodage d'un ou plusieurs blocs LDPC reçus sur la base des informations acquises et calculées aux étapes précédentes.

**2.** Procédé selon la revendication 1, dans lequel une technique d'entrelacement dans le temps est utilisée au cours d'une transmission de la partie des informations de signalisation L1 et dans lequel le calcul d'un nombre de bits de perforation comprend en outre :

le calcul d'un nombre provisoire de bits de perforation et d'un nombre provisoire de bits de mot de code de chaque bloc LDPC ;
le calcul d'un nombre final de bits de mot de code de chaque bloc LDPC en fonction de l'ordre de modulation, de la profondeur d'entrelacement dans le temps et du nombre provisoire de bits de mots de code ; et
le calcul d'un nombre final de bits de perforation en fonction du nombre provisoire de bits de perforation, du nombre provisoire de bits de mot de code et du nombre final de bits de mot de code.

**3.** Procédé selon la revendication 2, dans lequel le calcul d'un nombre provisoire de bits de perforation comprend en outre :
le calcul du nombre provisoire de bits de perforation en fonction d'une différence entre un nombre maximal de bits d'informations d'entrée d'un bloc BCH et le nombre de bits d'informations d'entrée de chaque bloc codé.

**4.** Procédé selon la revendication 2, dans lequel le calcul d'un nombre provisoire de bits de mot de code comprend en outre :
le calcul du nombre provisoire de bits de mot de code de chaque bloc codé en fonction du nombre de bits d'informations d'entrée de chaque bloc codé, d'un nombre de bits de parité d'un bloc BCH, du nombre provisoire de bits de perforation, et d'un débit de code effectif des blocs codés.

**5.** Procédé selon la revendication 2, dans lequel le calcul d'un nombre final de bits de mot de code comprend en outre :
le calcul du nombre final de bits de mot de code en fonction du nombre provisoire de bits de mot de code, d'un nombre de symboles utilisés pour une transmission d'une partie des informations de signalisation L1, de la profondeur d'entrelacement dans le temps et de l'ordre de modulation.

**6.** Procédé selon la revendication 1, dans lequel le nombre de blocs codés divisés de la partie des informations de signalisation L1 est calculé en fonction d'une valeur obtenue par la division du nombre de bits de la partie des informations de signalisation L1 par un nombre maximal de bits portant la partie des informations de signalisation L1 dans un symbole de multiplexage par répartition de fréquence orthogonale, OFDM.

**7.** Procédé selon la revendication 1, dans lequel le nombre de bits d'informations d'entrée de chaque bloc codé est calculé en fonction d'une valeur obtenue par la division du nombre de bits de la partie des informations de signalisation L1 par le nombre de blocs codés.

8. Procédé selon la revendication 2, dans lequel le nombre provisoire de bits de perforation est déterminé selon l'équation suivante :

$$N_{punc\_temp} = \left\lfloor \frac{6}{5} x \left( K_{bch} - K_{sig} \right) \right\rfloor$$

où $N_{punc\_temp}$ représente le nombre provisoire de bits de perforation, $K_{bch}$ représente le nombre maximal de bits d'informations d'entrée d'un bloc BCH, $K_{sig}$ représente le nombre de bits obtenu par l'ajout de bits de remplissage au nombre total de bits des informations de signalisation L1, et $\lfloor x \rfloor$ indique un nombre entier maximal inférieur ou égal à x.

9. Procédé selon la revendication 1, dans lequel le nombre de blocs LDPC est déterminé selon l'équation suivante :

$$N_{post\_FEC\_Blocks} = \left\lceil \frac{K_{post\_pure}}{N_{post\_max\_per\_symbol}} \right\rceil$$

où $N_{post\_FEC\_Blocks}$ représente le nombre de blocs LDPC, $K_{post\_pure}$ représente le nombre de bits de la partie d'informations de signalisation L1, $N_{post\_max\_per\_symbol}$ représente un nombre maximal de bits pouvant porter la partie d'informations de signalisation L1 dans un symbole de multiplexage par répartition de fréquence orthogonale, OFDM, et $\lceil x \rceil$ indique un nombre entier minimal supérieur ou égal à x.

10. Procédé selon la revendication 2, dans lequel le nombre final de bits de mot de code est calculé selon l'équation suivante :

$$N_{post} = \left\lceil \frac{N_{post\_temp}}{2\eta_{MOD} x N_{post\_FEC\_Blocks}} \right\rceil x 2\eta_{MOD} x N_{post\_FEC\_Blocks}$$

où $N_{post}$ représente le nombre final de bits de mot de code, $N_{post\_temp}$ représente le nombre provisoire de bits de mot de code, $\eta_{MOD}$ représente l'ordre de modulation, $N_{post\_FEC\_Blocks}$ représente le nombre de blocs LDPC, et $\lceil x \rceil$ indique un nombre entier minimal supérieur ou égal à x.

11. Procédé selon la revendication 2, dans lequel le nombre final de bits de mot de code est calculé selon l'équation suivante :

$$N_{post} = \begin{cases} Si\ L1\_TI\_depth = 00\ ou\ 01, \\ \left\lceil \dfrac{N_{post\_temp}}{2\eta_{MOD} x N_{post\_FEC\_Blocks}} \right\rceil x 2\eta_{MOD} x N_{post\_FEC\_Blocks}, \\ Sinon, \\ \left\lceil \dfrac{N_{post\_temp}}{2\eta_{MOD} x N_{L1\_TI\_depth}} \right\rceil x 2\eta_{MOD} x N_{L1\_TI\_depth}. \end{cases}$$

où $N_{post}$ représente le nombre final de bits de mot de code, $N_{post\_temp}$ représente le nombre provisoire de bits de mot de code, $\eta_{MOD}$ représente l'ordre de modulation, $N_{post\_FEC\_Blocks}$ représente le nombre de blocs codés, $N_{L1\_TI\_depth}$ représente la profondeur d'entrelacement dans le temps, et $\lceil x \rceil$ indique un nombre entier minimal supérieur ou égal à x.

12. Procédé selon l'une quelconque des revendications 2, 5, 11 et 12, dans lequel l'ordre de modulation est l'un quelconque de 1, 2, 4 et 6 respectivement pour la modulation de phase binaire, BPSK, la modulation de phase en quadrature, QPSK, la modulation d'amplitude en quadrature 16-aire, 16-QAM, et 64-QAM.

13. Appareil (700) de réception d'informations de commande par l'intermédiaire d'une partie d'informations de signalisation de couche 1, L1, la partie d'informations de signalisation L1 comprenant des informations associées à au moins un conduit de couche physique, PLP, dans une trame, dans un système de communication de diffusion, l'appareil comprenant :

une unité de réception (701, 703) pour la réception et le décodage d'informations de commande comprenant des informations de signalisation de couche 1, L1 ; et
un organe de commande (704) pour l'acquisition d'informations relatives à un nombre de bits de la partie des informations de signalisation L1 depuis une trame reçue, le calcul d'un nombre de blocs LDPC dans lesquels la partie des informations de signalisation L1 est divisée, et le calcul d'un nombre de bits d'informations d'entrée de chaque bloc LDPC lorsqu'il y a une pluralité de blocs LDPC, de sorte que la pluralité de blocs LDPC aient le même nombre de bits d'informations d'entrée, et le calcul d'un nombre de bits de perforation parmi des bits de parité de chaque bloc LDPC, et la commande d'une opération de l'unité de réception (701, 703) pour le décodage d'un ou plusieurs blocs LDPC reçus sur la base des informations acquises et calculées aux étapes précédentes.

14. Appareil (700) selon la revendication 13, apte à fonctionner selon l'une des revendications 2 à 12.

A FRAME (101)

| PREAMBLE (102) | P2-L1 SIGNALING (103) | PLP0-L2 SIGNALING (104) | PLP 1 (105) | PLP 2 (106) | • • • | PLP N (107) |

| L1 STATIC (108) | L1 CONFIGURABLE (109) | L1 DYNAMIC (110) |

FIG.1

EP 2 469 746 B1

| L1 PRE-SIGNALLING (INFO 41+RESERVED 227(OR 117) +CRC32) (202) | L1 STATIC (101 TO 283 BITS) (203) | L1 CONFIGURABLE (82 TO 8,242 BITS) (204) | L1 DYNAMIC (100 TO 8,770 BITS) (205) |
|---|---|---|---|

1ST ENCODER INPUT                    2ND ENCODER INPUT

→ ONE 16K LDPC BLOCK
: 300 BITS, BPSK (OR QPSK), 1/5
(206)

→ ONE 16K LDPC BLOCK : VARIABLE
INFO SIZE (283 TO 17, 295 BITS)
AND VARIABLE MCS (207)

FIG.2

| L1 PRE-SIGNALLING (INFO 41+RESERVED 227(OR 117) +CRC32) (302) | L1 STATIC (303) | L1 CONFIGURABLE (304) | L1 DYNAMIC (305) | PADDING (X BITS) (306) |
|---|---|---|---|---|

PART I : ONE FEC INPUT

PART II : N FEC INPUT (S)

→ ONE 16K LDPC CODE : 182 BITS, BPSK, 1/5

→ ONE OR MULTIPLE 16K LDPC BLOCK (S) : VARIABLE INFO SIZE (182 TO 17,194 BITS) AND VARIABLE MCS

1$^{ST}$ PART II FEC INPUT (307)

• • •

N-TH PART II FEC INPUT (308)

EP 2 469 746 B1

FIG.3

401 — DETERMINE L1 SIGNALING INFORMATION OF CURRENT FRAME

402 — DETERMINE NUMBER OF LDPC BLOCKS FOR TRANSMISSION OF L1 POST-SIGNALING INFORMATION

403 — CALCULATE NUMBER OF INPUT INFORMATION BITS FOR EACH LDPC BLOCK, AND ADD ZERO-PADDING BITS TO MATCH LDPC BLOCKS IN TERMS OF NUMBER OF INPUT INFORMATION BITS

404 — CALCULATE NUMBER OF PUNCTURING BITS AMONG PARITY BITS OF LDPC BLOCK

405 — GENERATE DETERMINED NUMBER OF LDPC BLOCKS USING L1 POST-SIGNALING INFORMATION

406 — MOVE TO NEXT FRAME

FIG.4

| | |
|---|---|
| 501 — ACQUIRE NUMBER OF BITS OF L1 POST-SIGNALING INFORMATION TRANSMITTED IN CURRENT FRAME | |
| 502 — CALCULATE NUMBER OF LDPC BLOCKS FOR TRANSMISSION OF L1 POST-SIGNALING INFORMATION | |
| 503 — CALCULATE NUMBER OF INPUT INFORMATION BITS FOR EACH LDPC BLOCK | 506 — MOVE TO NEXT FRAME |
| 504 — CALCULATE NUMBER OF PUNCTURING BITS AMONG PARITY BITS OF LDPC BLOCK | |
| 505 — DECODE EACH LDPC BLOCK DEPENDING ON NUMBER OF PUNCTURING BITS | |

FIG.5

<u>600</u>

TRANSMISSION
DATA BUFFER — 601

SCHEDULER — 602

CONTROL
INFORMATION
GENERATOR — 603

CONTROL
PARAMETER
CALCULATOR — 604

CONTROLLER — 605

LDPC
ENCODER — 606

TRANSMISSION
UNIT — 607

FIG.6

701 — L1 PRE-SIGNALING RECEIVER

702 — CONTROL PARAMETER CALCULATOR

CONTROLLER — 704

703 — L1 POST-SIGNALING RECEIVER

700

FIG.7

**EP 2 469 746 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 09154227 A
- EP 1513258 A2